# FASCICULE DE BREVET EUROPEEN

(11) **EP 0 440 129 B1**
(45) Date de publication et mention de la délivrance du brevet: **05.07.1995**
(21) Numéro de dépôt: 91101056.9
(22) Date de dépôt: 28.01.1991
(51) Int. Cl.: B07C 3/14, G06K 9/32

(54) **Procédé de localisation d'adresse sur des articles à trier, étiquette d'adressage et dispositif de mise en oeuvre du procédé**
Verfahren zum Lokalisieren der Adresse auf zu sortierenden Gegenständen, Adressenetikett und Vorrichtung zum Durchführen des Verfahrens
Method for locating the address on articles to be sorted, address label and device for carrying out the method

(30) Priorité: 02.02.1990 FR 9001238
(43) Date de publication de la demande: 07.08.1991
(73) Titulaire: COMPAGNIE GENERALE D'AUTOMATISME CGA-HBS, F-75008 Paris (FR)
(72) Inventeur: Miette, Emmanuel, F-75017 Paris (FR)
(74) Mandataire: Weinmiller, Jürgen

(56) Documents cités:
- US-A- 4 124 797
- US-A- 4 163 212
- US-A- 4 776 464

## Description

La présente invention porte sur la localisation des adresses sur des articles à expédier, en vue d'une lecture automatique des adresses pour un tri automatique des articles. Elle s'applique à toute catégorie d'articles et plus particulièrement aux articles appartenant à un spectre très large de courrier. Ces articles très large spectre sont notamment des revues, des grandes enveloppes, des paquets ou autres.

L'automatisation de plus en plus poussée du tri d'articles de courrier est actuellement rendue possible par l'utilisation de techniques de traitement d' image et de reconnaissance de caractères. Ces techniques travaillent sur l'image numérique des articles à trier. Quel que soit le mode de reconnaissance de caractères, pour la lecture d'adresse, l'une des fonctions préalable commune à assurer est de localiser l'adresse postale parmi toutes les informations contenues dans l'image numérique de chaque article.

Les moyens connus actuellement, assurant la fonction de localisation d'adresse sur les articles, sont essentiellement de deux types.

Les moyens de l'un de ces types utilisent les propriétés optiques de certains articles de courrier. Les plus répandus sont basés sur les réflexions optiques différentes crééés par la présence d'une fenêtre d'adressage sur les enveloppes. D'autres moyens de ce même type sont basés sur la détection des surépaisseurs crééés par une étiquette d'adressage apposée sur les articles ou par la périphérie des fenêtres d'adressage sur les articles. Cette détection des surépaisseurs se fait par lumière structurée.

Les moyens du deuxième type travaillent directement sur les images numériques des articles à trier. Ils sont basés sur une reconnaissance de forme de chaque article et utilisent des caractéristiques de définition de la position de la zone d'adressage sur chaque article.

La localisation de la zone d'adressage par des moyens de l'un ou l'autre de ces types permet l'analyse de son contenu et donc la lecture automatique d'adresse à des fins de tri automatique des articles. Les moyens du premier type cité conduisent à de bons résultats mais ils ne sont en général retenus que pour un spectre de courrier limité aux enveloppes à fenêtre. Les moyens du deuxième type s'appliquent à un spectre de courrier plus large que les précédents. Un moyen du deuxième type, analogue au procédé défini dans le préambule de la revendication 1, est décrit dans le document US-A-4 776 464. Il permet de tenir compte de situations particulières de lecture électronique de l'adresse sur un article, notamment lorsque les adresses ne respectent plus les caractéristiques de position, par exemple définies selon les normes postales. Ceci est le cas notamment lorsque les étiquettes d'adressage sont apposées à la main et incorrectement positionnées, ou lorsque certaines des étiquettes d'adressage, bien que correctement positionnées initialement, se sont décollées et ont glissées sur la face des articles, dans les pochettes en plastiques d'emballage qui les retiennent. Ce procédé connu utilise une marque d'adressage constituée de trois carrés concentriques en tant que partie de marque invariante par rotation et un petit segment sur le carré extérieur pouvant servir à déterminer l'orientation de l'adresse dans l'image numérisée d'un article à trier. Toutefois l'exploitation de ce petit segment n'est pas décrite dans ce document.

La présente invention a pour but un procédé tel que défini dans le préambule de la revendication 1, qui exploite une partie de marque de forme irrégulière, comme le petit segment, pour déterminer l'orientation de l'adresse à lire électroniquement dans l'image numérisée d'un article à trier.

Elle a donc pour objet un procédé de localisation d'adresse sur des articles à trier, en vue de l'analyse d'une adresse, conforme à la revendication 1.

Elle a également pour objet une étiquette d'adressage telle que définie à la revendication 4.

Elle a aussi pour objet un dispositif de mise en oeuvre du procédé tel que défini à la revendication 7.

Les caractéristiques et avantages de la présente invention apparaîtront clairement dans la description d'exemples de mise en oeuvre d'adressage et de localisation d'adresse illustré dans les dessins annexés. Dans ces dessins :
- la figure 1 illustre une revue à étiquette d'adressage selon la présente invention,
- la figure 2 montre à plus grande échelle la marque d'adressage portée par l'étiquette de la figure 1,
- la figure 3 est un schéma synoptique d'un dispositif de localisation d'adresse selon la présente invention,
- la figure 4 illustre un exemple de réalisation d'une partie de ce dispositif.

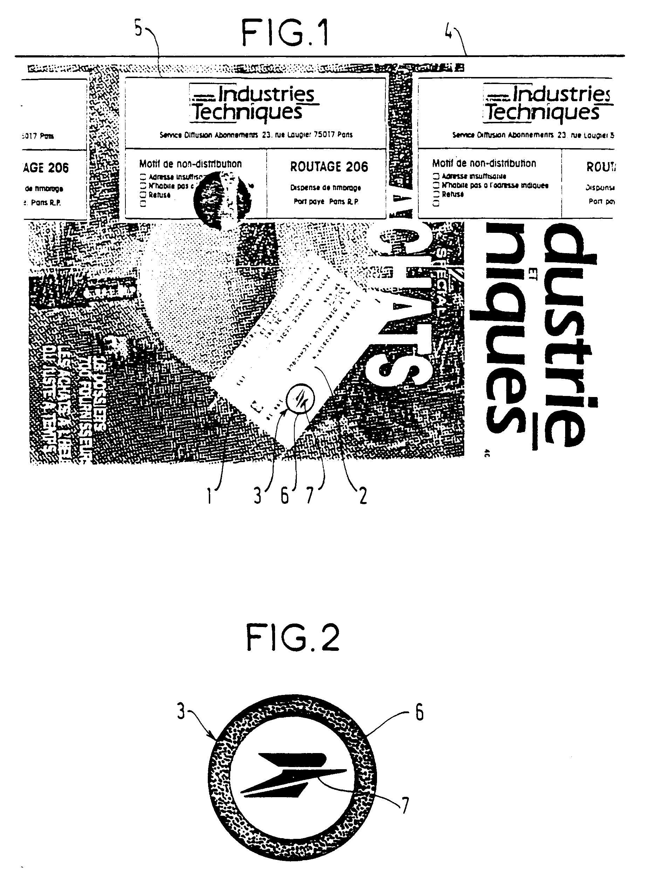

Dans la figure 1, on a illustré l'un des articles d'un lot d'articles large spectre, dont le tri est assuré de manière automatique à partir de l'analyse ou lecture de l'adresse que porte chacun des articles et qui est contenue dans l'image numérique de chacun des articles. Cet article est une revue. Il porte une étiquette d'adressage 1, sur laquelle est imprimée l'adresse 2 à analyser et une marque d'adressage 3.

Le lot d'articles auquel appartient cette revue peut contenir une grande variété d'articles, tels que d'autres revues, des journaux, des paquets ou des grandes enveloppes. Certains de ces articles sont à étiquette d'adressage telle que l'étiquette 1 apposée sur l'article et éventuellement recouverte d'un plastique de protection de l'article comme dans l'exemple illustré. D'autres articles sont à bande d'adressage ; enfin certaines des grandes enveloppes, en particulier, peuvent être à fenêtre d'adressage à travers laquelle l'adresse est apparente. Pour tous ces articles, la marque d'adressage 3 est associée directement à leur adresse.

Dans l'exemple illustré, on a volontairement montré l'étiquette 1 positionnée de manière tout à fait quelconque sur la face de la revue et retenue sur cette face dans une pochette de protection en plastique 4, cette pochette porte différentes informations publicitaires ou relatives ou mode d'expédition dans des emplacements périphériques 5 ; elle laisse apparents à travers elle l'étiquette d'adressage 1 et de nombreuses autres inscriptions et graphismes de la revue. L'étiquette 1 a pu par exemple être initialement collée à un emplacement adéquat, répondant à des normes de tri, mais s'est décollée et à glissé sur la face de la revue, sous la pochette plastique.

La marque d'adressage 3 est choisie selon la présente invention pour la localisation de l'adresse dans l'image numérique de cet article comme dans celle de tous les autres du lot. A cet effet, cette marque d'adressage 3 est en tant que telle différente de la quasi totalité des caractères et graphismes que peuvent porter les différents articles à trier, et présente des caractéristiques spécifiques prédéterminées pour sa propre détection mais aussi pour la localisation de l'adresse dans l'image numérique de chaque article concerné.

Un exemple de cette marque spécifique d'adressage 3 est décrit en regard de la figure 2. La marque 3 est constituée par la combinaison d'une couronne 6, de diamètre intérieur et de diamètre extérieur fixés, qui est une figure invariante en rotation, et d'un insigne irrégulier 7. L'insigne 7 est intérieur à la couronne. Il est représenté constitué par le logo de la Poste française, qui répond à la définition, mais peut être un tout autre graphisme présentant une asymétrie totale. Cet insigne 7 est affecté à la validation d'une couronne détectée dans l'image numérique, mais également à la détermination de l'orientation de la marque d'adressage 3 dans cette image numérique de l'article, et donc à la localisation de l'adresse présente dans la zone d'adressage.

En effet, quelles que soient les différentes orientations possibles d'analyse d'articles successifs, la couronne 6 est invariante en rotation, il lui correspond un premier ensemble de données dans l'image de l'objet. Par contre à l'insigne 7 correspondent différents deuxièmes ensembles de données pour différentes orientations d'analyse. Cependant à un nombre limité choisi de différentes orientations d'analyse correspond un même nombre limité de deuxièmes ensembles prédéterminés de données pour cet insigne.

Ce premier ensemble de données caractéristique de la couronne seule et ce nombre limité de deuxièmes ensembles de données caractéristiques de l'insigne constituent des caractéristiques de la marque d'adressage 3, qui sont utilisées dans le dispositif de localisation, selon l'invention.

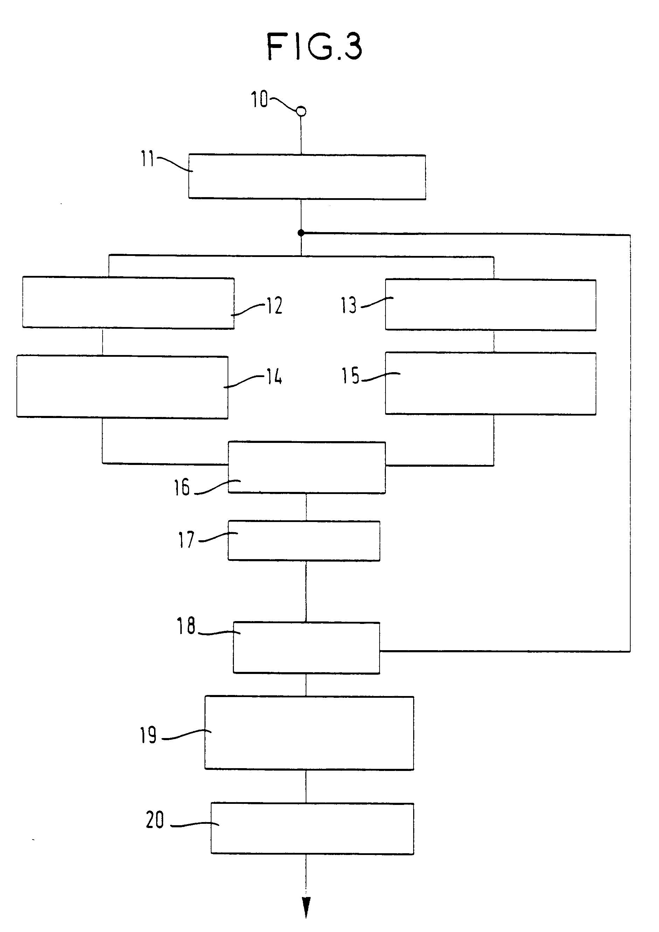

Le schéma synoptique de ce dispositif est donné dans la figure 3. Le dispositif reçoit des données binaires issues d'analyse des articles successifs à trier. On précise simplement que ces articles se présentent, par exemple, sur chant et en pile, dans un magasin équipé en dépileur. Le circuit d'analyse en tant que tel connu analyse l'article terminal de la pile avant ou après son extraction. Ce circuit d'analyse peut être constitué par une caméra et un circuit de numérisation binaire. Il délivre en série les bits successifs traduisant les niveaux de teinte des zones élémentaires le long de colonnes successives d'analyse Y (ou lignes d'analyse X). En particulier la caméra est une caméra C.C.D assurant la saisie d'image, par colonne Y, de chaque article extrait du magasin et défilant devant elle. Le niveau de fond des articles est par exemple traduit par un bit 0, et les caractères ou informations par des bits 1. Le pouvoir de résolution de ce circuit est de manière connue de 8 points/mm.

L'image numérique ainsi définie est reçue sur une entrée 10 du dispositif de localisation d'adresse. De préférence, un circuit de sous échantillonnage 11 la convertit en un signal d'image de résolution moindre, soit de 4 points/mm, pour une réduction de temps de traitement.

Le dispositif assure un traitement du signal d'image numérique délivré par le circuit 11. Il comporte essentiellement :
- un circuit 12 d'analyse en colonne Y et un circuit 13 d'analyse en ligne X, transversale à Y, du signal d'image, tous deux reliés au circuit 11 et assurant la détection de deux segments de ladite couronne 6, sur la colonne Y et sur la ligne X, respectivement, à partir des caractéristiques de la couronne, pour la mise en évidence d'un point milieu de chacun des deux segments selon Y et X respectivement,
- un circuit 14 de détection d'axe médian selon X relié au circuit 12, et un circuit 15 de détection d'axe médian selon Y relié au circuit 13, déterminant à partir des points milieux mis en évidence par les circuits 12 et 13, respectivement, la présence d'axes selon X et Y, pouvant appartenir à la couronne,
- un circuit de corrélation 16 relié aux circuits 14 et 15 détectant une coïncidence en un point de deux axes X et Y précités pour déterminer le centre de la couronne, la combinaison en ce point des axes X et Y correspondant à une propriété d'accumulation de la couronne dont le centre correspond au milieu de la médiane de n'importe quelle corde,
- un circuit de filtrage 17, relié au circuit 16 et combinant des centres proches les uns et des autres, qui ont été détectés par ce circuit 16, pour valider un seul centre,
- un circuit 18 d'analyse de l'image binaire dans toute couronne définie à partir de chaque centre validé, relié au circuit 11 pour recevoir l'image de l'article et au circuit de filtrage 17 pour sélectionner la seule image de l'intérieur de toute couronne, ce circuit 18 assurant une décomposition en cellules élémentaires de l'intérieur de toute couronne pour son analyse,
- un ensemble de comparaison 19, relié au circuit 18 et comparant le signal d'analyse de l'intérieur de chaque couronne avec un nombre limité de signaux de référence prédéterminés définissant pour différentes orientations discrètes le signal d'analyse de l'insigne 7 de la marque d'adressage 3,
- un circuit de sortie 20, relié à l'ensemble 19 et détectant une coïncidence entre ce signal d'analyse de l'intérieur de toute couronne et l'un des signaux de références, validant la couronne si la coïncidence détectée est unique dans toute l'image de l'article et définissant son orientation, pour la localisation de l'adresse transmise au système de reconnaissance d'adresse et de tri aval ou au contraire l'invalidant en cas de non coïncidence de comparaison ou de plusieurs couronnes dans l'image du même article, pour le rejet de l'article concerné du système aval.

Ce dispositif de localisation d'adresse peut être réalisé par des moyens logiciels uniquement ; il travaille alors sur l'image numérique de chaque article entièrement stockée.

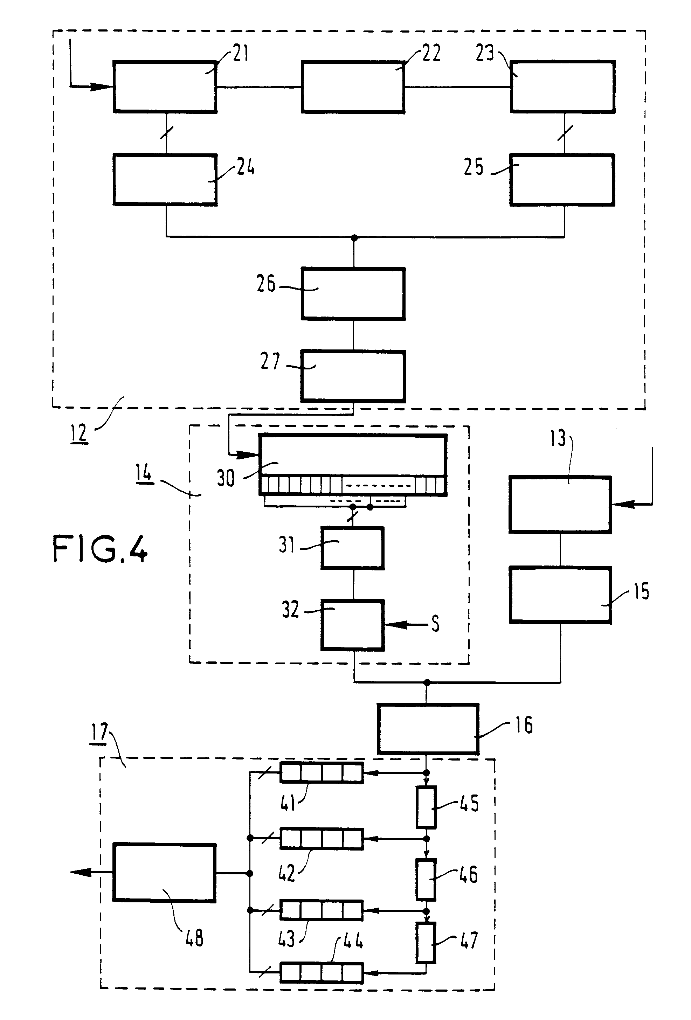

De préférence, le dispositif de localisation d'adresse est réalisé par des circuits logiques, assurant le traitement des bits délivrés par le circuit de sous échantillonnage 11, en mode pipe-line, c'est-à-dire sans stockage préalable de l'image de l'article. La figure 4 donne un tel mode de réalisation. Elle est décrite, en regard d'un exemple numérique indiqué ci-après, pour lequel :
- l'ordre des bits délivrés par le circuit 11 est :
. 1 à 1024 pour la première colonne d'analyse Y délivrée,
. 1025 à 2048 pour la deuxième, et ainsi de suite pour les colonnes suivantes,

- un bit 0 traduit le niveau de fond de l'article, un bit 1 traduit une information sur l'article,
- les caractéristiques dimensionnelles de la couronne 6 sont :

| | |
|---|---|
| . diamètre extérieur | 15 mm soit 60 bits |
| . diamètre intérieur | 13 mm soit 52 bits |
| . épaisseur | 1 mm soit 4 bits. |

- la longueur maximale d'un segment de la couronne, considéré en biais, est de 6 bits.

Les circuits 12, 14, 16 et 17, ont simplement été précisés dans la figure 4.

Le circuit 12 d'analyse en colonne Y des bits successifs d'image, comporte en entrée trois registres à décalage en série 21, 22 et 23, définissant une fenêtre d'analyse en Y de 64 bits. Le registre 21 reçoit les bits successifs d'image, dans l'ordre dans lequel ils sont délivrés ; sa capacité est choisie de 8 bits, correspondant à la longueur maximale d'un segment de couronne traduite par 6 bits à 1 avec deux bits supplémentaires à 0 encadrant ce segment ; ce registre a 8 sorties en parallèle pour les 8 bits qu'il contient. Le registre 22 est choisi de 40 bits, il couple simplement le dernier étage du registre 21 à l'entrée du registre 23 en réalisant un retard. Le registre 23 est de 16 bits et a 16 sorties en parallèle.

Les 8 sorties en parallèle du registre 21 sont reliées à un circuit de logique programmé (P.L.A.), 24. Celles du registre 23 sont reliées aux entrées d'un autre circuit 25 analogue au circuit 24. Ces circuits 24 et 25 sont affectés l'un comme l'autre à la détection de 4 à 6 bits consécutifs à 1 dans les bits qu'ils reçoivent. Ils délivrent sur leur sortie un signal traduisant cette détection ou la non détection de tels bits à 1.

Un circuit de coïncidence 26, tel qu'une porte ET, est relié aux deux circuits 24 et 25. Sa sortie au niveau logique 1 traduit la présence d'un axe médian de couronne résultant de ces deux segments.

Ce circuit de coïncidence 26 est relié à un autre circuit de logique programmé 27, affecté à l'invalidation de toute nouvelle coïncidence issue du circuit 25 sur la longueur de la fenêtre d'analyse en Y, de 64 bits, définie par les registres 21, 22 et 23.

Le circuit 14 de détection d'axe médian selon X comporte en entrée un registre à décalage 30 recevant les états successifs du circuit de coïncidence 26. Il a une capacité de 1024 bits x 64 bits, correpondant à 64 colonnes du signal d'image de l'article. Ses étages de rangs 1, 1025, etc.. définissent 64 sorties en parallèle, sur lesquelles sont délivrées les 64 états traduisant les éventuelles détections de coïncidence délivrées par le circuit 26 et transmise par le circuit 27. Ces 64 sorties en parallèle correspondent la représentation d'une ligne de 64 bits passant par le centre de la couronne. Un sommateur 31 relié aux sorties en parallèle du registre 30 comptabilise les états des sorties en parallèle. Un comparateur à seuil 32, valide l'existence d'un axe médian de couronne, lorsque le résultat de comparaison est supérieur au seuil. On prend en pratique un seuil S de l'ordre de 50% du résultat maximal escompté pour la longueur des axes médians déterminés, pour tenir compte d'une incertitude sur la traduction de l'épaisseur de la couronne dans le signal d'analyse de l'article.

Le circuit d'analyse en ligne X des bits successifs d'image est comparable au circuit 12 illustré, mis à part ses registres d'entrée dont les capacités sont respectivement de 8 x 1024, 40 x 1024 bits et 16 x 1024 bits, pour travailler sur une fenêtre de 64 x 1024 bits d'analyse en X contenant la représentation d'une ligne X de 64 bits.

Le circuit de détection d'axe médian Y, 15, est de réalisation analogue à celui du circuit 14 précité. Son registre d'entrée est de capacité réduite à 64 bits pour la représentation de 64 bits selon Y passant le centre.

Le circuit de corrélation 16 est réalisé par une porte ET à 2 entrées reliées aux comparateurs à seuil des circuits 14 et 15. Il détecte une détection simultanée d'un axe médian X et d'un axe médian Y ; cette détection simultanée correspond donc à un centre de couronne.

Le circuit de filtrage 17 permet la réduction à un seul point de centres proches reconnus par le circuit 16 et qui sont transmis au circuit 17. Il constitue une fenêtre de 4 bits consécutifs en Y, qui appartiennent à 4 lignes successives X. Il est réalisé par 4 registres 41 à 44 de 4 bits chacun, correspondant aux bits consécutifs en Y des différentes lignes X, et par 3 registres 45 à 47 de 1024 bits montés entre les entrées des registres 41-42, 42-43 et 43-44, traduisant le décalage des lignes X. Ce circuit de filtrage comporte en outre, un circuit de décision 48 à table de référence, assurant la suppression des centres adjacents déterminés par le circuit 16.

Ce sont ces seuls centres de couronnes dans l'image, issus du circuit de filtrage, qui sont validés par le traitement de l'image intérieure de chaque couronne assuré par les circuits 18 et 19 de la figure 3. Ce dernier traitement est réalisé de préférence par logiciel.

Le mode de réalisation du dispositif selon l'invention, décrit ci-avant, a été donné à titre d'exemple.

On peut bien entendu remplacer certains moyens par d'autres moyens équivalents, détectant les caractéristiques de la couronne seule et utilisant ses propriétés pour reconnaître son centre et détectant les données de l'insigne en regard de différentes orientations possibles, sans pour autant sortir du cadre de cette invention comme definie dans les revendications.

## Revendications

1. Un procédé de localisation d'adresse sur des articles à trier, en vue de l'analyse d'une adresse, consistant à associer au préalable, pour chaque article, une marque d'adressage (3) à l'adresse (2) inscrite sur une face de cet article, cette marque (3) étant distincte de l'ensemble des autres informations portées sur la face de cet article et étant constituée d'une première partie (6) ayant une forme invariante par rotation dans un plan d'image numérisée de la face de cet article et une seconde partie (7) ayant une forme irrégulière dans ledit plan d'image numérisée et inscrite à l'intérieur de la première partie (6) de la marque, cette seconde partie (7) de la marque étant telle qu'elle définit une direction de référence pour localiser et analyser l'adresse (2) inscrite sur la face de cet article, et consistant ensuite à numériser une image de ladite face de chaque article, à comparer (12,13,14,15,16,17) des premières parties de l'image numérisée de chaque article à un premier ensemble prédéterminé de données caractéristiques de ladite première partie de la marque pour déterminer deux coordonnées cartésiennes d'un point caractéristique de la première partie (6) de la marque dans l'image numérisée de cet article, à identifier (18) la seconde partie (7) de la marque dans l'image numérisée de cet article sur la base desdites coordonnées du point caractéristique pour en déduire deux coordonnées cartésiennes d'un point de l'adresse à analyser pour cet article et à déterminer l'orientation de la seconde partie de la marque dans l'image numérisée de cet article pour en déduire ladite direction de référence pour l'analyse de l'adresse sur cet article, caractérisé en ce que pour déterminer l'orientation de la seconde partie de la marque pour cet article:
- on sélectionne (18) dans l'image numérisée de cet article une seconde partie d'image numérisée représentative de la seconde partie (7) de la marque,
- et à partir de différents deuxièmes ensembles de données en nombre limité qui définissent respectivement des orientations différentes de la seconde partie de la marque dans une image numérisée d'une face d'article, on recherche (19,20) parmi ces différents deuxièmes ensembles de données celui qui coïncide avec cette seconde partie d'image numérisée de cet article de manière à déterminer l'orientation de ladite seconde partie de la marque dans l'image numérisée de cet article et ladite direction de référence pour l'analyse de l'adresse pour cet article.

2. Le procédé selon la revendication 1, dans lequel l'image numérisée de cet article est analysée suivant les lignes et les colonnes de celle-ci pour déterminer les deux coordonnées cartésiennes du point caractéristique de la première partie (6) de la marque.

3. Le procédé selon l'une des revendications 1 ou 2, caractérisé en ce qu'il est prévu d'utiliser une marque d'adressage comprenant, en tant que première partie (6), une couronne définie par un diamètre extérieur et un diamètre intérieur et en ce que la seconde partie de la marque (7) est à placer à l'intérieur de la zone définie par le diamètre intérieur de la couronne.

4. Etiquette d'adressage d'articles pour la mise en oeuvre du procédé selon la revendication 1, caractérisée en ce qu'elle porte, outre l'adresse de l'article sur lequel elle est apposée, ladite marque d'adressage (3) étant constituée d'une première partie (6) ayant une forme invariante par rotation dans un plan d'image numérisée de la face de cet article et une seconde partie (7) ayant une forme irrégulière dans ledit plan d'image numérisée et inscrite à l'intérieur de la première partie (6) de la marque, cette seconde partie (7) de la marque étant telle qu'elle définit une direction de référence pour localiser et analyser l'adresse (2) inscrite sur la face de cet article.

5. Etiquette selon la revendication 4, caractérisée en ce que ladite marque d'adressage est pré-imprimée à un emplacement prédéterminé différent de celui affecté à l'adresse.

6. Etiquette selon l'une des revendications 4 ou 5, caractérisée en ce que ladite marque d'adressage est située sensiblement dans l'un des coins de l'étiquette rectangulaire.

7. Dispositif de localisation d'adresse dans l'image numérique d'articles successifs, pour la mise en oeuvre du procédé selon la revendication 3, caractérisé en ce qu'il comporte :
- des moyens (12, 13) de détection de paires de segments opposés de ladite couronne dans ladite image numérique de chaque article, à partir du premier ensemble de données définissant les caractéristiques de la couronne,
- des moyens de traitement (14, 15, 16) des paires de segments opposés détectés, pour déterminer un centre de couronne,
- des moyens d'extraction (18) de l'image de l'intérieur de la couronne correspondant à chaque centre déterminé dans l'image numérique de l'article, et
- des moyens de comparaison (19) de l'image extraite de l'intérieur de la couronne avec un nombre limité de références correspondant au deuxième ensemble de données, validant le centre et la couronne correspondante et définissant l'orientation de la marque d'adressage et donc la position de l'adresse, lors d'une seule et unique coïncidence de comparaison obtenue pour toute l'image de l'article concerné.

8. Dispositif selon la revendication 7, caractérisé en ce que lesdits moyens de détection (12, 13) comportent un circuit d'analyse en colonne Y et un circuit d'analyse en ligne X du signal d'image de l'article et définissant l'un et l'autre une fenêtre d'analyse en X et en Y, pour le traitement de ces bits.

9. Dispositif selon la revendication 8, caractérisé en ce que lesdits circuits d'analyse en Y et X (12, 13) reçoivent directement le flot de bits du signal d'image de l'article, ce signal étant dit délivré en colonne, et comportent, l'un et l'autre, des premiers registres à décalage d'entrée (21, 22, 23) constituant les fenêtres d'analyse en X et Y, respectivement, et présentant chacun un premier et un deuxième groupe de sorties en parallèle pour délivrer les seuls bits susceptibles de traduire deux segments opposés de couronne.

10. Dispositif selon la revendication 9, caractérisé en ce que lesdits moyens de traitement (14-16) comportent deux circuits de logique programmé (24, 25) reliés à l'un et l'autre des premier et deuxième groupes de sorties en parallèle des premiers registres à décalage, et un circuit de coïncidence (26) dont les entrées sont connectées aux sorties des deux circuits de logique programmés couplés aux circuits d'analyse en X et Y (12, 13), respectivement.

11. Dispositif selon la revendication 10, caractérisé en ce qu'il comporte, en outre, un circuit de logique programmé supplémentaire (27) relié audit circuit de coïncidence (26) pour invalider, après chaque détection de coïncidence, toute détection de coïncidence ultérieure dans la longueur de la fenêtre concernée, en Y ou X.

12. Dispositif selon la revendication 10, caractérisé en ce que lesdits moyens de traitement comportent, en outre :
- un deuxième registre à décalage (30) couplé à chaque circuit de coïncidence (26) et recevant lesdites détections de coïncidence, dit registre de ligne X (30) pour celui appartenant aux moyens de traitement couplés au circuit d'analyse en X et registre de colonne Y pour l'autre, ledit registre de ligne présentant des sorties en parallèle de représentation des coïncidences en ligne X et celui de colonne des sorties parallèles de représentation des coïncidences en colonne Y, pour une longueur d'axe médian définie,
- un circuit sommateur (31) couplé aux sorties en parallèle de chacun des registres de ligne et de colonne, et
- un comparateur à seuil (32) relié à chaque circuit sommateur pour la validation d'axe médian, si le résultat du sommateur est supérieur au seuil.

13. Dispositif selon la revendication 12, caractérisé en ce que les comparateurs à seuil (32) des moyens de traitement couplés aux circuits d'analyse en X et Y sont reliés à un circuit ET (16) de détection simultanée de deux axes médians.

14. Dispositif selon la revendication 13, caractérisé en ce qu'il comporte, en outre un circuit de filtrage (17) relié au circuit ET (16), recevant les détections simultanées successives d'axes médians, et éliminant les détections de centres adjacents déterminés.

15. Dispositif selon la revendication 14, caractérisé en ce que ledit circuit de filtrage (17) comporte quatre troisièmes registres à décalage (41-44) chacun de capacité d'une fenêtre en Y, réduite à quelques bits, trois quatrièmes registres à décalage (45-47) chacun couplant l'entrée de l'un des troisièmes registres à un autre et de capacité correspondant à une colonne complète du signal d'image de l'article, et un circuit de décision (48) à table de références couplé aux sorties prises en parallèle des quatre troisièmes registres.

## Claims

1. A method of locating an address on an article to be sorted in order to scan an address consisting in associating with each article beforehand an addressing mark (3) to the address (2) written on one side of said article, said mark (3) being different from all other information carried by said article and comprising a first part (6) having a shape that is invariant on rotation in a digitised image plane of the side of said article and a second part (7) having an irregular shape in said digitised image plane and written inside the first part (6) of the mark, said second part (7) of the mark being such that it defines a reference direction for locating and scanning the address (2) written on the side of said article, and thereafter consisting in digitising an image of said side of each article, comparing (12, 13, 14, 15, 16, 17) first parts of the digitised image of each article with a first predetermined set of data characteristic of said first part of the mark to determine two cartesian coordinates of a point characteristic of the first part (6) of the mark in the digitised image of said article, identifying (18) the second part (7) of the mark in the digitised image of said article on the basis of said coordinates of the characteristic point to deduce therefrom two cartesian coordinates of a point in the address to be scanned for said article and determining the orientation of the second part of the mark in the digitised image of said article to deduce therefrom said reference direction for scanning the address on said article, characterised in that to determine the orientation of the second part of the mark for said article:
- a second digitised image part representative of the second part (7) of the mark is selected (18) in the digitised image of said article,
- and on the basis of a limited number of different second sets of data which define respective different orientations of the second part of the mark in a digitised image of a side of an article, a search (19, 20) is conducted among said various second sets of data for that which coincides with said second digitised image part of said article in order to determine the orientation of said second part of the mark in the digitised image of said article and said reference direction for scanning the address for said article.

2. The method according to claim 1char. in that the digitised image of said article is scanned along the lines and the columns thereof to determine the two cartesian coordinates of the characteristc point of the first part (6) of the mark.

3. The method according to claim 1 or claim 2 wherein there is provision for using an addressing mark comprising, as the first part (6), a ring defined by an outside diameter and an inside diameter and in that the second part of the mark (7) is placed inside the area defined by the inside diameter of the ring.

4. Article addressing label for implementing the method according to claim 1 characterised in that it carries, in addition to the address of the article to which it is applied, said addressing mark (3), comprising a first part (6) having a shape which is invariant on rotation in a digitised image plane of the side of said article and a second part (7) having an irregular shape in said digitised image plane and written inside the first part (6) of the mark, said second part (7) of the mark being such that it defines a reference direction for locating and scanning the address (2) written on the side of said article.

5. Label according to claim 4 characterised in that said addressing mark is preprinted at a predetermined location outside the location intended for said address.

6. Label according to claim 4 or claim 5 characterised in that said addressing mark is substantially in one corner of said label which is rectangular.

7. Device for locating addresses in digital images of successive articles, for implementing the method according to claim 3 characterised in that it comprises:
- means (12, 13) for detecting pairs of opposite segments of said ring in said digitised image of each article from said first data set defining the characteristics of the ring,
- means (14, 15, 16) for processing pairs of detected opposite segments to determine a ring centre,
- means (18) for extracting the image from the interior of the ring corresponding to each identified centre in the digitised image of the article, and
- means (19) for comparing the image extracted from the interior of the ring with a limited number of reference images representing the second data set, validating the centre and the corresponding ring and defining the orientation of the addressing mark and therefore the position of the address when a single coincidence is detected by said comparison for all of the image of the article.

8. Device according to claim 7 characterised in that said detector means (12, 13) comprise a Y column scanner and an Y line scanner processing the article image signal and conjointly defining an X-Y scan window in which said bits are processed.

9. Device according to claim 8 characterised in that said Y and X scanners (12, 13) receive directly the bits of the article image signal, which is scanned in columns, and each comprise first input shift registers (21, 22, 23) constituting respective X and Y scan windows and each having first and second groups of parallel outputs adapted to deliver only those bits likely to represent two opposite ring segments.

10. Device according to claim 9 characterised in that said processing means (14-16) comprise two programmed logic arrays (24, 25) respectively connected to the first and second groups of parallel outputs of the first shift registers and a coincidence circuit (26) whose inputs are connected to the outputs of the two programmed logic arrays connected to the X and Y scanners (12, 13), respectively.

11. Device according to claim 10 characterised in that it comprises a further programmed logic array (27) connected to said coincidence circuit (26) to invalidate, after each coincidence is detected, any subsequent coincidence detection in the Y or X window concerned.

12. Device according to claim 10 characterised in that said processing means further comprise:
- a second shift register (30) connected to each coincidence circuit (26) and receiving indications of said detected coincidences, constituting an X line register (30) in the case of that which is part of the processing means connected to the X scanner and constituting a Y column register in the case of the other, said line register having parallel outputs representing X line coincidences and said column register having parallel outputs representing Y column coincidences, for a defined median axis length,
- an adder circuit (31) connected to the parallel outputs of each line and column register, and
- a threshold comparator (32) connected to each adder circuit to validate the median axis if the adder output is above the threshold.

13. Device according to claim 12 characterised in that said threshold comparators (32) of the processing means connected to the X and Y scanners are connected to an AND gate (16) to indicate simultaneous detection of two median axes.

14. Device according to claim 13 characterised in that it further comprises a filter (17) connected to said AND gate (16) receiving indications of successive simultaneous detections of median axes and eliminating specific adjacent centre detections.

15. Device according to claim 14 characterised in that said filter (17) comprises four third shift registers (41-44) the capacity of each of which is a few bits representing one Y window, three fourth shift registers (45-47) each connected between the inputs of two of the third registers and each having a capacity corresponding to a complete column of the signal produced by scanning the article image, and a look-up table based decision circuit (48) connected to the paralleled outputs of the third registers.

## Patentansprüche

1. Verfahren zur Lokalisierung der Adressen bei zu sortierenden Gegenständen zur späteren Analyse einer Adresse, wobei das Verfahren darin besteht, zuerst für jeden Gegenstand eine Adressenmarke (3) der auf eine Fläche dieses Gegenstands geschriebenen Adresse (2) zuzuordnen, wobei diese Marke (3) sich von der Gesamtheit der anderen auf der Fläche dieses Gegenstands vorhandenen Informationen unterscheidet und aus einem ersten Teil (6), der eine bei Drehung unveränderliche Form in einer digitalisierten Bildebene der Fläche dieses Gegenstands besitzt, und aus einem zweiten Teil (7) besteht, der eine in dieser digitalisierten Bildebene unregelmäßige Form hat und im Inneren des ersten Teils (6) der Marke eingetragen ist, wobei dieser zweite Teil (7) der Marke eine Bezugsrichtung definiert, um die Adresse (2), die auf die Fläche dieses Gegenstands geschrieben ist, zu lokalisieren und zu analysieren, und wobei das Verfahren dann darin besteht, ein Bild dieser Fläche jedes Gegenstands zu digitalisieren, erste Teile des digitalisierten Bilds jedes Gegenstands mit einer ersten vorbestimmten Gruppe von charakteristischen Daten des ersten Teils der Marke zu vergleichen (12, 13, 14, 15, 16, 17), um zwei kartesische Koordinaten eines charakteristischen Punkts des ersten Teils (6) der Marke im digitalisierten Bild dieses Gegenstands zu bestimmen, um den zweiten Teil (7) der Marke im digitalisierten Bild dieses Gegenstands auf der Basis der Koordinaten des charakteristischen Punkts zu identifizieren (18), um daraus zwei kartesische Koordinaten eines Punkts der für diesen Gegenstand zu analysierenden Adresse abzuleiten und die Ausrichtung des zweiten Teils der Marke im digitalisierten Bild dieses Gegenstands zu bestimmen, um daraus die Bezugsrichtung für die Analyse der Adresse auf dem Gegenstand abzuleiten, dadurch gekennzeichnet, daß man zur Bestimmung der Ausrichtung des zweiten Teils der Marke für diesen Gegenstand:
- im digitalisierten Bild dieses Gegenstands einen zweiten Teil eines digitalen Bilds repräsentativ für den zweiten Teil (7) der Marke auswählt (18),
- und ausgehend von der begrenzten Anzahl von verschiedenen zweiten Datengruppen, die je unterschiedliche Ausrichtungen des zweiten Teils der Marke in einem digitalisierten Bild einer Fläche eines Gegenstands definieren, unter diesen verschiedenen zweiten Datengruppen diejenige sucht (19, 20), die mit diesem zweiten Teil des digitalisierten Bilds dieses Gegenstands zusammenfällt, um die Ausrichtung des zweiten Teils der Marke im digitalisierten Bild dieses Gegenstands und die Bezugsrichtung für die Analyse der Adresse dieses Gegenstands zu bestimmen.

2. Verfahren nach Anspruch 1, bei dem das digitalisierte Bild dieses Gegenstands gemäß den Zeilen und Spalten dieses Bilds analysiert wird, um die beiden kartesischen Koordinaten des charakteristischen Punkts des ersten Teils (6) der Marke zu bestimmen.

3. Verfahren nach einem der Ansprüche 1 oder 2, dadurch gekennzeichnet, daß vorgesehen ist, eine Adressenmarke zu verwenden, die als ersten Teil (6) einen Ring aufweist, der durch eine Außendurchmesser und einen Innendurchmesser definiert wird, und daß der zweite Teil der Marke (7) im Inneren der vom Innendurchmesser des Rings definierten Zone anzuordnen ist.

4. Adressenetikett zur Anwendung des Verfahrens gemäß Anspruch 1, dadurch gekennzeichnet, daß es außer der Adresse des Gegenstands, auf dem es angebracht ist, die Adressenmarke (3) aufweist, bestehend aus einem ersten Teil (6), der eine bei Drehung unveränderliche Form in einer digitalisierten Bildebene der Fläche dieses Gegenstands besitzt, und einem zweiten Teil (7), der eine in dieser digitalisierten Bildebene unregelmäßige Form hat und im Inneren des ersten Teils (6) der Marke eingetragen ist, wobei dieser zweite Teil (7) der Marke eine Bezugsrichtung definiert, um die Adresse (2), die auf der Fläche dieses Gegenstands eingeschrieben ist, zu lokalisieren und zu analysieren.

5. Adressenetikett nach Anspruch 4, dadurch gekennzeichnet, daß die Adressenmarke an einer vorbestimmten Stelle vorgedruckt ist, die sich von der der Adresse zugeteilten Stelle unterscheidet.

6. Adressenetikett nach einem der Ansprüche 4 oder 5, dadurch gekennzeichnet, daß die Adressenmarke sich im wesentlichen in einer der Ecken des rechteckigen Etiketts befindet.

7. Vorrichtung zur Adressenlokalisierung im digitalen Bild von aufeinanderfolgenden Gegenständen zur Anwendung des Verfahrens nach Anspruch 3, dadurch gekennzeichnet, daß sie aufweist:
- Mittel (12, 13) zur Erfassung von Paaren von einander gegenüberliegenden Segmenten des Rings im digitalen Bild jedes Gegenstands, ausgehend von der ersten Gruppe von Daten, die die Merkmale des Rings definieren,
- Mittel (14, 15, 16) zur Verarbeitung der erfaßten Paare von gegenüberliegenden Segmenten, um ein Ringzentrum zu bestimmen,
- Mittel (18) zur Entnahme des Bilds aus dem Inneren des Rings entsprechend jedem im digitalen Bild des Gegenstands bestimmten Zentrum, und
- Mittel (19) zum Vergleich des aus dem Inneren des Rings entnommenen Bilds mit einer begrenzten Anzahl von Bezugsdaten entsprechend der zweiten Datengruppe, die das Zentrum und den entsprechenden Ring validieren und die Ausrichtung der Adressenmarke und somit die Position der Adresse definieren, bei einer einzigen Vergleichskoinzidenz, die für das ganze Bild des betroffenen Gegenstands erhalten wurde.

8. Vorrichtung nach Anspruch 7, dadurch gekennzeichnet, daß die Erfassungsmittel (12, 13) eine Analyseschaltung für die Y-Spalte und eine Analyseschaltung für die X-Zeile des Bildsignals des Gegenstands enthalten und beide ein Fenster zur Analyse in X- und in Y-Richtung zur Verarbeitung dieser Bits definieren.

9. Vorrichtung nach Anspruch 8, dadurch gekennzeichnet, daß die Schaltungen zur Analyse in Y- und in X-Richtung (12, 13) direkt den Fluß von Bits des Bildsignals des Gegenstands empfangen, wobei dieses Signal als Spalte für Spalte erhalten bezeichnet wird, und beide erste Eingangs-Schieberegister (21, 22, 23) aufweisen, die die Analysefenster in X- bzw. in Y-Richtung bilden und je eine erste und eine zweite Gruppe von parallelen Ausgängen aufweisen, um die einzigen Bits zu liefern, die zwei einander gegenüberliegende Ringsegmente darstellen können.

10. Vorrichtung nach Anspruch 9, dadurch gekennzeichnet, daß die Verarbeitungsmittel (14-16) zwei programmierte Logikschaltungen (24, 25), die je mit der ersten bzw. der zweiten Gruppe von parallelen Ausgängen der ersten Schieberegister verbunden sind, und eine Koinzidenzschaltschaltung (26) aufweisen, deren Eingänge mit den Ausgängen der beiden programmierten Logikschaltungen verbunden sind, die mit den Analyseschaltungen in X- bzw. in Y-Richtung (12, 13) gekoppelt sind.

11. Vorrichtung nach Anspruch 10, dadurch gekennzeichnet, daß sie außerdem eine zusätzliche programmierte Logikschaltung (27) aufweist, die mit der Koinzidenzschaltung (26) verbunden ist, um nach jeder Erfassung einer Koinzidenz jede spätere Erfassung einer Koinzidenz in der Länge des betroffenen Fensters in Y- oder X-Richtung ungültig zu machen.

12. Vorrichtung nach Anspruch 10, dadurch gekennzeichnet, daß die Verarbeitungsmittel außerdem aufweisen:
- ein zweites Schieberegister (30), das mit jeder Koinzidenzschaltung (26) gekoppelt ist und die Koinzidenzerfassungen empfängt, X-Zeilenregister (30) für dasjenige Register genannt, das zu den Verarbeitungsmitteln gehört, die mit der Analyseschaltung in X-Richtung gekoppelt ist, und Y-Spaltenregister für das andere Register genannt, wobei das Zeilenregister parallele Ausgänge zur Darstellung der Koinzidenzen in Zeilenrichtung X und das Spaltenregister parallele Ausgänge zur Darstellung der Koinzidenzen in Spaltenrichtung Y für eine definierte Mittelachsenlänge aufweist,
- ein Summierglied (31), das mit den parallelen Ausgängen jedes der Zeilen- bzw. Spaltenregister gekoppelt ist, und
- einen Schwellenkomparator (32), der mit jedem Summierglied verbunden ist, um die Mittelachse zu validieren, wenn das Ergebnis des Summierglieds über der Schwelle liegt.

13. Vorrichtung nach Anspruch 12, dadurch gekennzeichnet, daß die Schwellenkomparatoren (32) der an die Analyseschaltung in X-Richtung und in Y-Richtung gekoppelten Verarbeitungsmittel mit einem UND-Tor (16) verbunden sind, das das gleichzeitige Auftreten von zwei Mittelachsen erfaßt.

14. Vorrichtung nach Anspruch 13, dadurch gekennzeichnet, daß sie außerdem eine mit dem UND-Tor (16) verbundene Filterschaltung (17) aufweist, die die aufeinanderfolgenden gleichzeitigen Erfassungen von Mittelachsen empfängt und die Erfassungen der bestimmten benachbarten Zentren eliminiert.

15. Vorrichtung nach Anspruch 14, dadurch gekennzeichnet, daß die Filterschaltung (17) vier dritte Schieberegister (41-44), die je die Kapazität eines Fensters in Y-Richtung, reduziert auf einige Bits, besitzen, drei vierte Schieberegister (45-47), die je den Eingang eines der dritten Register mit einem anderen koppeln und deren Kapazität einer vollständigen Spalte des Bildsignals des Gegenstands entspricht, und eine Entscheidungsschaltung (48) mit Bezugstabelle aufweist, der an die parallel genommenen Ausgänge der vier dritten Register gekoppelt ist.
